# EUROPÄISCHE PATENTSCHRIFT

(11) **EP 1 722 080 B1**
(45) Veröffentlichungstag und Bekanntmachung des Hinweises auf die Patenterteilung: **21.08.2013**
(21) Anmeldenummer: 06008404.3
(22) Anmeldetag: 24.04.2006
(51) Int. Cl.: F01N 3/32, F02B 37/16, F02B 37/22

(54) **Brennkraftmaschine und Verfahren zum Betreiben dieser**
Internal combustion engine and method of operation thereof
Moteur à combustion interne et procédé pour son fonctionnement

(30) Priorität: 12.05.2005 DE 102005021953
(43) Veröffentlichungstag der Anmeldung: 15.11.2006
(73) Patentinhaber: Volkswagen Aktiengesellschaft, 38440 Wolfsburg (DE)
(72) Erfinder: Pott, Ekkehard, Dr., 38518 Gifhorn (DE); Becker, Jürgen, Dr., 38440 Wolfsburg (DE); Kühlmeyer, Jens, 38518 Gifhorn (DE); Oppermann, Ralf, 38110 Braunschweig (DE)

(56) Entgegenhaltungen:
- WO-A1-2004/029425
- DE-A1- 19 641 467

## Beschreibung

Die Erfindung betrifft eine Brennkraftmaschine, insbesondere für ein Kraftfahrzeug, mit einem Ansaugtrakt für Frischluft, einem Abgastrakt für Abgas und einem Abgasturbolader (ATL), wobei eine Turbine des Abgasturboladers im Abgastrakt und ein Verdichter des Abgasturboladers im Ansaugtrakt der Brennkraftmaschine angeordnet ist, gemäß dem Oberbegriff des Patentanspruchs 1. Die Erfindung betrifft femer ein Verfahren zum Betreiben einer Brennkraftmaschine, insbesondere für ein Kraftfahrzeug, bei dem eine für den Verbrerinungsprozess über einen Ansaugtrakt der Brennkraftmaschine angesaugte Frischluft vor dem Eintritt in einen Brennraum der Brennkraftmaschine von einem Verdichter eines Abgasturboladers verdichtet wird, wobei der Verdichter des Abgasturboladers von einer im Abgastrakt der Brennkraftmaschine angeordneten Turbine angetrieben wird, gemäß dem Oberbegriff des Patentanspruchs 9.

Abgasturbo-Aufgeladene Motoren benötigen infolge der Gaslaufzeiten vom Brennraum zur Turbine bzw. vom Verdichter über den Ladeluftkühler bis zum Brennraum sowie der rotatorischen Trägheit der beweglichen ATL-Komponenten eine gewisse Zeit, bis bei einer Lastsprunganforderung das stationäre Soll-Drehmoment erreicht ist. Je niedriger Ausgangs-Last und Drehzahl sind, desto ausgeprägter ist die Verzögerung des Ansprechens des Turboladers. Als besonders nachteilig erweist sich hier bei hochaufgeladenen Motoren (>75kW/l) das Abfahren aus dem Stand. Durch besonders kleine, trägheitsarme Turbinen und Verdichter sowie durch Aufteilung des Abgasmassenstroms auf mehrere kleine Lader kann der Effekt gemindert werden. Auch hier ist das verzögerte Ansprechen jedoch spürbar. Der Effekt wird zusätzlich subjektiv verstärkt durch die höhen stationären Drehmomentgradienten über der Drehzahl.

Aus der DE 102 35 341 A1 und der DE 196 41 467 C2 oder der WO 2004/029425 ist ein Kraftfahrzeug mit einem Verbrennungsmotor mit zugeordnetem Sekundärluftlader zum Einblasen von Sekundärluft in ein Abgasrohr des Verbrennungsmotors bekannt, wobei der Sekundärluftlader eine in einem Bypass zu einer zum einem Saugrohr des Verbrennungsmotors führenden Frischluftleitung angeordnete, über ein im Bypass angeordnetes Regelventil mit Frischluft beaufschlagbare Turbine und einen über diese antreibbaren Verdichter aufweist. Die Turbine wird durch das Druckgefälle zwischen dem Umgebungsdruck in der Frischluftleitung vor einer in dieser angeordneten Drosselklappe und dem Saugrohrdruck in dem nachgeschalteten Frischluftleitungsabschnitt, der zu den Ansaugrohren des Verbrennungsmotors führt, angetrieben. Ein solches Sekundärluftsystem kommt weitgehend ohne elektrische oder elektromechanische Komponenten aus, der eigentliche Luftzufuhrbetrieb erfolgt rein pneumatisch. Das Einblasen von Sekundärluft in das Abgasrohr des Verbrennungsmotors dient zur Verbesserung der Aufoxidation der Kohlenwasserstoffe und Kohlenmonoxid. Hierfür ist es ganz wesentlich, dass die eingeblasene Sekundärluft sauerstoffreich ist. Der Sekundärluftlader wird in der Regel dann genutzt, wenn das Fahrzeug im kalten Zustand gestartet wird, da hierdurch der Katalysator schnell auf Betriebstemperatur gebracht werden kann.

Bei mittels Abgasturbolader aufgeladenen Brennkraftmaschinen ist es bekannt, dass es bei bestimmten Betriebspunktwechseln zu einem schlechten Ansprechverhalten des Abgasturboladers kommt. Dies wird allgemein als so genanntes Abgästurboloch bezeichnet. Um dieses Abgasturboloch zu überbrücken ist es beispielsweise aus der DE 100 62 377 A1 bekannt, im Ansaugtrakt zusätzlich einen elektrisch angetriebenen Verdichter vorzusehen. Der elektrisch angetriebene Verdichter wird dabei jeweils dann zugeschaltet, wenn eine Aufladung durch eine Anforderung, in der Regel durch den Fahrer des mit der Brennkraftmaschine angetriebenen Fahrzeugs, durch die Trägheit und die physikalischen Verhältnisse an dem konventionellen Abgasturbolader nicht gemäß dem gewünschten Komfort ausreichend schnell realisiert werden kann. Ein solches Konzept benötigt jedoch den zusätzlichen, elektrisch angetriebenen Verdichter.

Aus der DE 198 40 629 C2 ist ein Antriebsaggregat für ein Fahrzeug bekannt, bei dem Sekundärluft mittels eines zuschaltbären Sekundäriuftgebtäses bedarfsabhängig stromauf eines Katalysators und stromab einer Turbine eines Abgasturboladers in die Abgasleitung eingeführt wird. Das Sekundärluftdebläse wird zusätzlich als Zusatzverdichter im Ansaughub verwendet.

Der Erfindung liegt die Aufgabe zugrunde, eine Brennkraftmaschine und ein Verfahren zum Betreiben dieser bzgl. des Ladedruck- und Drehmomentanstiegs beispielsweise während des Anfahrvorgangs eines mit der Brennkraftmaschine ausgestatteten Kraftfahrzeuges zu verbessem. Insbesondere bei Lastsprüngen bei kleinen Drehzahlen, soll ein schnelles Erreichen des stationären Drehmomentes erzielt werden.

Diese Aufgabe wird erfindungsgemäß durch eine Brennkraftmaschine der o.g. Art mit den in Anspruch 1 gekennzeichneten Merkmalen und durch ein Verfahren der o.g. Art mit den in Anspruch 9 gekennzeichneten Merkmalen gelöst. Vorteilhafte Ausgestaltungen der Erfindung sind in den weiteren Ansprüchen beschrieben..

Dazu ist es bei einer Brennkraftmaschine der o.g. Art erfindungsgemäß vorgesehen, dass eine Fluidpumpe vorgesehen ist, deren saugseitiger Anschluss mit dem Abgastrakt stromab der Turbine des Abgasturboladers und dessen druckseitiger Anschluss mit dem Abgastrakt stromauf der Turbine des Abgasturboladers verbunden ist.

Dies hat den Vorteil, dass der Turbine des Abgasturboladers zusätzliche Energie mittels eines in den Abgastrakt eingeführten Sekundärfluidstromes zugeführt werden kann, so dass insbesondere an Betriebspunkten der Brennkraftmaschine, an denen der Abgasturbolader keine ausreichende Aufladung der Brennkraftmaschine zur Verfügung stellt, beispielsweise beim Anfahren eines mit der Brennkraftmaschine Kraftfahrzeugs aus dem Stand, das so genannte Turboloch dadurch vermieden werden kann, dass der Turbine des Abgasturboladers mittels des zusätzlichen Sekundäriluidstromes ein höherer Fluidmassenstrom zugeführt wird, als die Brennkraftmaschine zum Abtrieb der Turbine des Abgasturboladers abgibt.

Zum zusätzlichen Erhöhen des Druckes des von der Fluidpumpe stromauf der Turbine des Abgasturboladers dem Abgastrakt der Brennkraftmaschine zugeführten Sekundärfluidstromes ist die Fluidpumpe als Verdichter ausgebildet, der mit einer Turbine als Antrieb des Verdichters verbunden ist, wobei die Turbine der Fluidpumpe im Ansaugtrakt der Brennkraftmaschine angeordnet ist.

Zweckmäßigerweise ist in dem Ansaugtrakt der Brennkraftmaschine stromab des Verdichters des Abgasturboladers eine Drosselklappe angeordnet, wobei der Ansaugtrakt eine Bypassleitung aufweist, die den Verdichter des Abgasturboladers und die Drosselklappe überbrückt, wobei femer die Turbine der Fluidpumpe in der Bypassleitung angeordnet ist. Hierdurch wird eine Druckdifferenz im Ansaugtrakt über die Drosselklappe für den Antrieb der Turbine und damit der Fluidpumpe zum Fördern des Sekundärfluidstromes genutzt.

Damit der bei geschlossener Drosselklappe infolge des höheren Abgasturbolader-Verdichtervolumens ansteigende Gegendruck nicht zu einer Minderung der Turbinenförderleistung führt, ist in dem Ansaugtrakt zwischen dem Verdichter des Abgasturboladers und der Drosselklappe eine Abblasevorrichtung angeordnet.

Um das Druckgefälle vor der Turbine weiter zu erhöhen, ist eine Abblaseleitung vorgesehen, welche die Abbiasevorrichtung fiuidieitend mit der Bypassleitung stromauf der Turbine verbindet.

Zum Regeln des der Brennkraftmaschine zugeführten Frischluftmassenstromes über den Ansaugtrakt sowie zum wahlweise Zu- bzw. Abschalten der Fluidpumpe ist in der Bypassleitung stromab der Turbine der Fluidpumpe ein Sperrventil angeordnet.

Zum bzgl. der Turbine stromaufseitigen Zuführen von wahlweise Abgas oder Sekundärluft oder einem Gemisch aus beiden ist zwischen dem saugseitigen Anschluss der Fluidpumpe und dessen Anschluss am Abgastrakt stromab der Turbine des Abgasturboladers ein 3/2-Wegeventil angeordnet, wobei dieses 3/2-Wegeventil zusätzlich mit dem Ansaugtrakt verbunden ist.

Bei einem Verfahren der o.g. Art ist es erfindungsgemäß vorgesehen, dass dem Abgastrakt der Brennkraftmaschine stromab der Turbine des Abgasturboladers Abgas entnommen und von einer Fluidpumpe dem Abgastrakt stromauf der Turbine des Abgasturboladers wieder zugeführt wird.

Dies hat den Vorteil, dass der Turbine des Abgasturboladers zusätzliche Energie mittels eines in den Abgastrakt eingeführten Sekundärfluidstromes zugeführt werden kann, so dass insbesondere an Betriebspunkten der Brennkraftmaschine, an denen der Abgasturbolader keine ausreichende Aufladung der Brennkraftmaschine zur Verfügung stellt, beispielsweise beim Anfahren eines mit der Brennkraftmaschine ausgerüsteten Kraftfahrzeugs aus dem Stand, das so genannte Turboloch dadurch vermieden werden kann, dass der Turbine des Abgasturboladers mittels des zusätzlichen Sekundärfluldstromes ein höherer Fluidmassenstrom zugeführt wird, als die Brennkraftmaschine zum Abtrieb der Turbine des Abgasturboladers abgibt.

Zum zusätzlichen Erhöhen des Druckes des von der Fluidpumpe stromauf der Turbine des Abgasturboladers, dem Abgastrakt der Brennkraftmaschine zugeführten Sekundärfluidstromes wird das entnommene Abgas vor der Zuführung in den Abgastrakt stromauf der Turbine des Abgasturboladers von einem Verdichter der Fluidpumpe verdichtet.

Dadurch, dass der Verdichter von einer im Ansaugtrakt der Brennkraftmaschine angeordneten Turbine angetrieben wird, kann eine Druckdifferenz im Ansaugtrakt über eine dort angeordnete Drosselklappe für den Antrieb der Turbine und damit der Fluidpumpe zum Fördern des Sekundärfluidstromes genutzt werden.

Zum Erhöhen des Sauerstoffgehaltes des Sekundärfluidstromes, beispielsweise um durch exotherme chemische Reaktionen im Abgas einen Katalysator zu heizen oder einen Schadstoffanteil im Abgas zu reduzieren, wird dem von der Fluidpumpe an den Abgastrakt stromauf der Turbine des Abgasturboladers zugeführten Sekundärluftstrom stromauf der Fluidpumpe Frischluft zugemischt.

Zur äußeren Abgasrückführung ist ein 3/2-Wegeventil vorgesehen, welches den saugseitigen Anschluss des Verdichters mit der Bypassleitung stromauf der Turbine und mit dem Abgastrakt stromab des Katalysators verbindet.

Die Erfindung wird im folgenden anhand der Zeichnung näher erläutert. Diese zeigt in
- Fig. 1: ein schematisches Blockschaltbild einer ersten bevorzugten Ausführungsform einer erfindungsgemäßen Brennkraftmaschine,
- Fig. 2: ein schematisches Blockschaltbild einer zweiten bevorzugten Ausführungsform einer erfindungsgemäßen Brennkraftmaschine,
- Fig. 3: ein schematisches Blockschaltbild einer dritten bevorzugten Ausführungsform einer erfindungsgemäßen Brennkraftmaschine und
- Fig. 4: ein schematisches Blockschaltbild einer vierten bevorzugten Ausführungsform einer erfindungsgemäßen Brennkraftmaschine

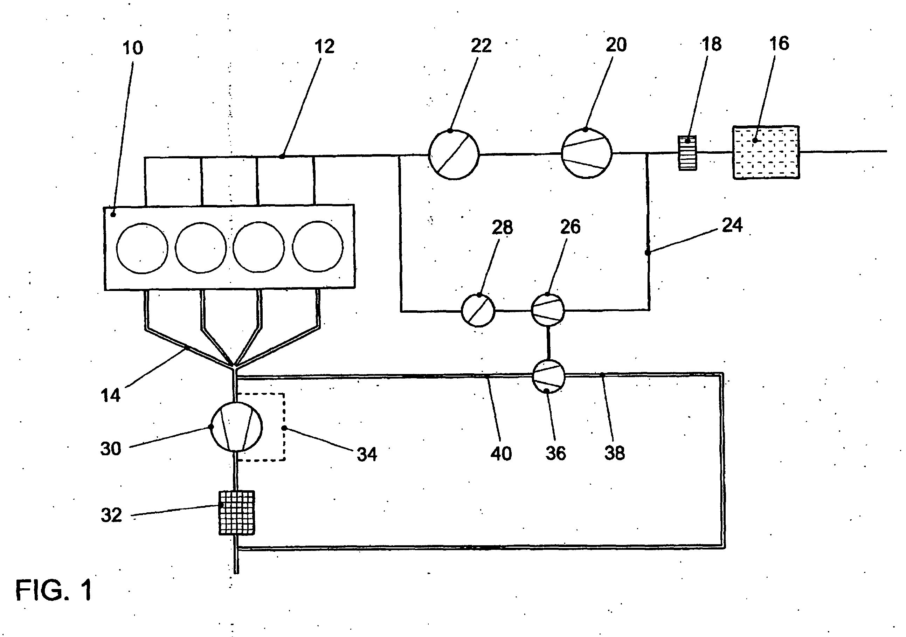

Die In Fig. 1 in Form eines schematisches Blockschaltbildes dargestellte, erste bevorzugte Ausführungsform einer erfindungsgemäßen Brennkraftmaschine umfasst einen Motorblock 10, einen Ansaugtrakt 12 und einen Abgastrakt 14. Im Ansaugtrakt 12 sind ein Luftfilter 16, ein Heißftlmmessfühfer (HFM) 18, ein Verdichter 20 eines Abgasturboladers, eine Drosselklappe 22 sowie eine Bypasslehun g 24, welche den Verdichter 20 und die Drosselklappe 22 überbrüokt, angeordnet. In der Bypassleitung 24 sind eine Turbine 26 sowie ein Sperreventil 28 angeordnet. In dem Abgastrakt 14 sind eine Turbine 30 des Abgasturboladers, welche mit dem Verdichter 20 in Verbindung steht und diesen antreibt, sowie ein Katalysator 32 angeordnet. Ferner ist an der Turbine 30 ein Wastegate 34 vorgesehen.

Erfindungsgemäß ist mit der Turbine 26 in der Bypassleitung 24 ein Verdichter 36 verbunden, welcher von der Turbine 26 angetrieben wird. Ein saugseitiger Anschluss 38 des Verdichters 36 ist mit dem Abgastrakt 14 stromab der Turbine 30 des Abgasturboladers sowie stromab des Katalysators 32 und ein druckseitiger Ansetiluss 40 des Verdichters 36 mit dem Abgastrakt 14 stromauf der Turbine 30 des Abgasturboladers verbunden. Der Verdichter 36 bildet eine Fluidpumpe aus, die von der Turbine 26 angetrieben wird, Abgas aus dem Abgastrakt 14 stromab der Turbine 30 absaugt und stromauf der Turbine 30 wieder dem Abgastrakt 14 zuführt.

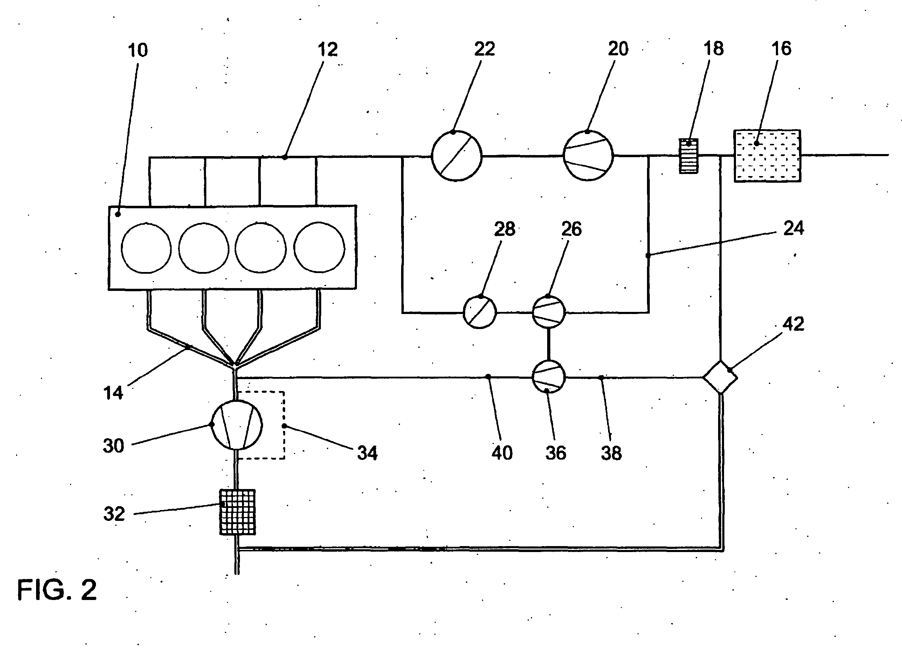

In Fig. 2 ist eine zweite bevorzugte Ausführungsform der erfindungsgemäßen Brennkraftmaschine dargestellt, wobei, funktionsgleiche Teile mit gleichen Bezugsziffern versehen sind, sodass zu deren Erläuterung auf die obige Beschreibung der Fig. 1 verwiesen wird. Im Unterschied zur ersten Ausführungsform ist zusätzlich ein 3/2-Wegeventil 42 vorgesehen, welches zwischen dem saugseitigen Anschluss 38 des Verdichters 36 und der Verbindung mit dem Abgastrakt 14 Strom ab der Turbine 30 angeordnet ist. Ein weiterer Anschluss des 3/2-Wegeventils 42 ist mit dem Ansaugtrakt 12 der Brennkraftmaschine verbunden. Mittels dieses 3/2-Wegeventils 42 wird dem Verdichter 36 neben dem Abgas zusätzlich wahlweise eine gewisser Anteil Frischluft zugeführt. Bei dieser Ausführungsform ergibt sich zusätzlich der Vorteil, dass der Verdichter 36 wahlweise auch als Sekundärluftlader verwendet werden kann.

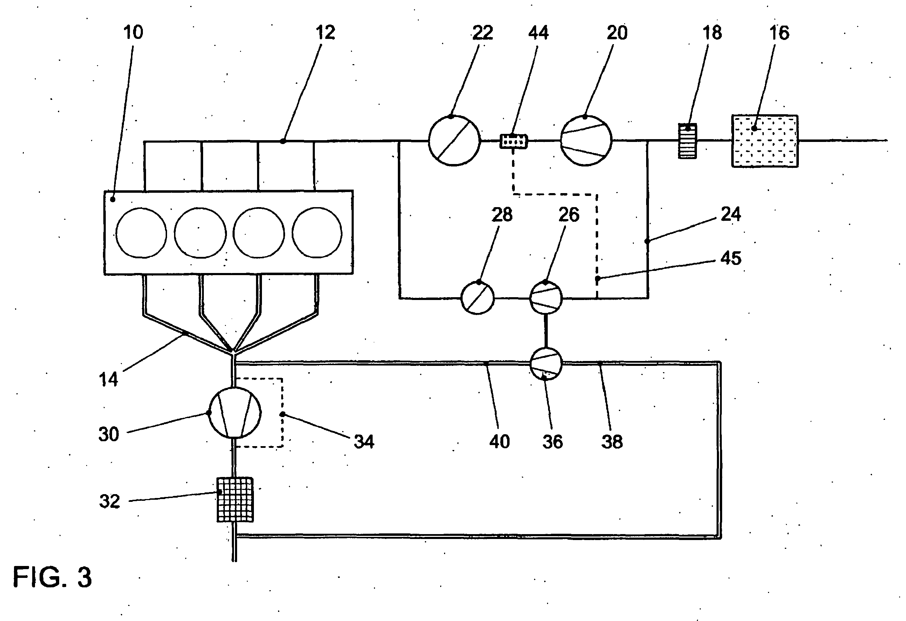

In Fig. 3 ist eine dritte bevorzugte Ausführungsform der erfindungsgemäßen Brennkraftmaschine dargestellt, wobei funktionsgleiche Teile mit gleichen Bezugsziffem versehen sind, sodass zu deren Erläuterung auf die obige Beschreibung der Fig. 1 und 2 verwiesen wird. Bei dieser Ausführungsform Ist zusätzlich zwischen dem Verdichter 20 des Abgasturboladers und der Drosselklappe 22 eine Abblasevorrichtung 44 angeordnet, damit der bei geschlossener Drosselklappe 22 infolge des höheren ATL-Verdichterförderstroms ansteigende Gegendruck.nicht zu einer Minderung der Turbinenförderleistüng führt. Diese Abblasevorrichtung 44 ist vorteilhaft nahe der Drosselklappe 22 und hinter einem (nicht dargestellten) Ladeluftkühler, angeordnet.

Optional ist zusätzlich eine Abblaseleitung 45 vorgesehen, welche die Abblasevorrichtung 44 fluidleitend mit der Bypassleitung stromauf der Turbine 26 verbindet und die abgeblasene Luft von der Abblasevorrichtung 44 vor die Turbine 26 leitet. Dadurch kann bei geschlossener Klappe 22 der vom Verdichter 20 erzeugte Druck dazu genutzt werden das Druckgefälle über Turbine 26 zu erhöhen. Zusätzlich kann so ein Schubumluftsystem ohne weitere Bauteile dargestellt werden.

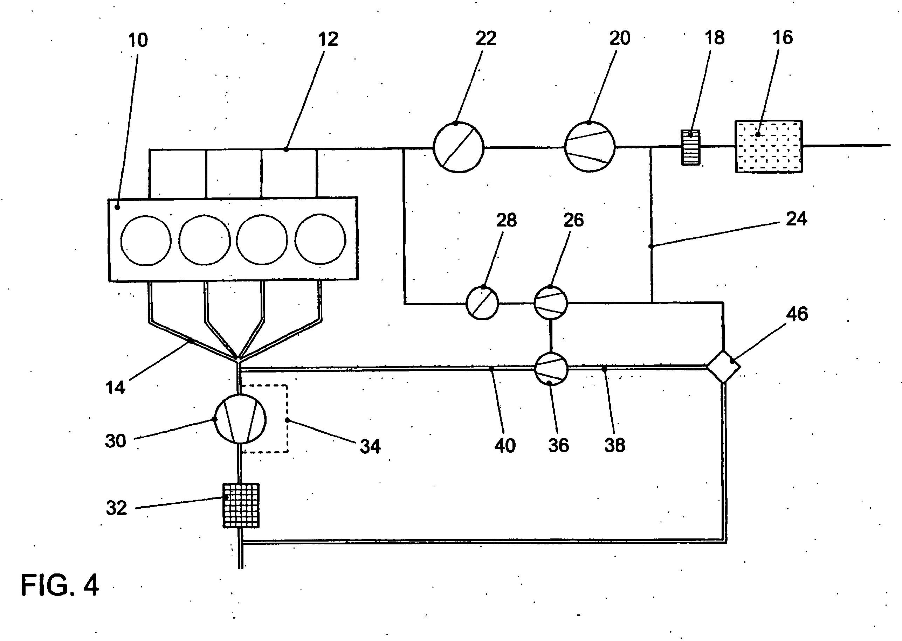

In Fig. 4 ist eine vierte bevorzugte Ausführungsform der erfindungsgemäßen Brennkraftmaschine dargestellt, wobei funktionsgleiche Teile mit gleichen Bezugsziffern versehen sind, sodass zu deren Erläuterung auf die obige Beschreibung der Fig. 1 bis 3 verwiesen wird. Bei dieser Ausführungsform ist zusätzlich ein 3/2-Wegeventil 46 als AGR-Ventil vorgesehen, welches den saugseitigen Anschluss 38 des Verdichters 36 mit der Bypassleitung 24 stromauf der Turbine 26 und mit dem Abgastrakt 14 stromab der Turbine 30 des Abgasturboladers verbindet.

Durch das AGR-Ventil 46 kann der stromab der Turbine 30 des Abgasturboladers, entnommene Teil des Abgases der im Einlasstrakt verbauten Turbine 26 des Sekundärluftladers zugeführt werden. Die Turbine 26 kann so mit einer höheren Temperatur beaufschlagt werden, womit dem Verdichter 36 mehr Antriebsleistung zur Verfügung steht. Durch die Entspannung des AGR-/Luft-Gemisches wird zudem prinzipbedingt eine AGR-Kühlung realisiert. Bei kalten Ansaugtemperaturen und hoher Luftfeuchte vor dem Luftfilter 16 wird durch das extern rückgeführte Abgas zudem der Betriebsbereich des Systems unter der Betriebsvoraussetzung "Vereisungssicherheit" in der Ansaugleitung nach Turbine 26 ausgeweitet.

Das externe AGR-Ventil 46 bzw. die Schaltorgane 22, 28 und 44 ist bzw. sind bevorzugt so geregelt, dass die Druclaustände in den Leitungen 24 und 38 betriebspunktoptimal bzgl. Kraftstoffverbrauch; Drehzahl des ATL 20 und 30, Abgasemissionen sowie Laufruhe des Motors 10 sind.

Nachfolgend wird die Funktionsweise der Erfindung näher erläutert, wobei diese nachfolgenden Erläuterungen im Wesentlichen für alle drei oben beschriebenen Ausführungsformen der erfindungsgemäßen Brennkraftmaschine zu treffen, soweit nicht explizit etwas anderes angegeben ist.

Erfindungsgemäß wird die Turbinen-Verdichter-Einheit 26, 36 dazu genutzt, um an der Turbine 30 des Abgasturboladers (ATL) einen höheren Abgasmassenstrom als durch den Motorbetriebspunkt vorgegeben bereitzustellen. Der Saugluftmassenstrom wird unter Umgehung des Drosselklappen-Pfades zumindest teilweise über die Turbine 26 dem Motorblock 10 zugeführt. Die Turbine 26 treibt unter Ausnutzung des Druckgefälles über die Drosselklappe 22 den Verdichter 36 an, welcher Abgas hinter der Turbine 30 des Abgasturboladers (ideal hinter einem ersten dem Verdichter 30 des ATL nachgeschalteten Katalysator 32) entnimmt, verdichtet und vor der Turbine 30 des Abgasturboladers unter einem höheren Druck als dem Abgasdruck des vom Motorblock 10 kommenden Abgases wieder zuführt. Zusätzlich kann es vorgesehen sein, dass der Verdichter 36 zur Erhöhung des Massenstromes und zur Anreicherung mit Sauerstoff zusätzlich Frischluft verdichtet und dem Abgas vor ATL zuführt, gemäß der Ausführungsform von Fig.2 Hierbei ist jedoch zu beachten, dass bei einem mageren Abgas NOₓ-Konvertierungsprobleme auftreten, sodass gegebenenfalls zusätzlich ein NOₓ-Speicherkatalysator vorgesehen ist.

Die Regelung des dem Motorblock 10 zugeführten Luftmassenstroms erfolgt durch die Drosselklappe 22 sowie des der Turbine 26 nachgeschalteten vorzugsweise stufenlos schaltbaren Sperrventils 28.

Femer ist vorteilhaft eine Minderung der Edelmetallbeladung der dem Motorblock 10 nachgeschalteten Abgasreinigung zumindest auf einem ersten dem Motorblock 10 nachgeschalteten Katalysator 32 möglich. Durch die Option, ab Motorstart hinter einem Katalysator 32 Abgas zu entnehmen und vor dem Katalysator 32 wieder einzuspeisen, kann un- bzw. teilkonvertiertes Abgas erneut dem Katalysator zur Reinigung zugeführt werden. Zur Vermeidung von Wasserschlagschäden an dem ATL vorgeschalteten Lambdasonden (nicht dargestellt) ist es vorteilhaft, eine Einspeisestelle stromab einer solchen Sonde vorzusehen. Ebenso ist denkbar, eine Entnahme von Abgas erst nach Überschreiten einer vorgebbaren modellierten oder gemessenen Mindesttemperatur hinter einem ersten dem ATL nachgeschalteten Katalysator zuzulassen. In diesem Falle ist zur Emissionsminderung eine bevorzugte Abgasführung über das Wastegate 34 der ATL-Turbine 30 vorteilhaft, auch wenn damit das erwünschte spontanere Anspringen des ATL nicht so intensiv erreicht wird.

Aufgrund der optimierten Abgasreinigung der erfindungsgemäßen Brennkraftmaschine ist es denkbar, die Abgasnachbehandlung insbesondere bzgl. Katalysatorvolumen und absolutem Edelmetailgehalt gegenüber konventionellen Auslegungen zu reduzieren. Fahrzeuge mit Ottomotoren, die im US-Fahrzyklus FTP-75 mit thermisch ungeschädigten Katalysatoren eine HC-Emission von <0,007 g/mi und eine NOₓ-Emission von <0,015 g/mi erreichen, werden heute im Stand der Technik mit Katalysatoren ausgerüstet, die ein Gesamtvolumen von >0,9I Katvolumen pro I Hubvolumen und Edelmetallgehalte zumindest eines Katalysators von ≥ 100g/ft3 (3,59g/dm3) Katvolumen aufweisen. Bel Einsatz des erfindungsgemäßen Startverfährens können Katalysatorsysteme zum Einsatz kommen, deren Edelmetallgehalt zumindest eines Katalysators (insbesondere aller Katalysatoren) auf ≥100g/ft3 (3,59g/dm3); insbesondere auf ≤80g/ft3 (2,87g/dm3), optimal ≤60g/ft3 (2.15g/dm3) bzw. ≤40g/ft3 (1,44g/dm3) abgesenkt werden kann, ohne dass über eine Fahrstrecke von 120.000 Meilen bei ordnungsgemäßem Zustand des Fahrzeugs in demselben Fahrzeug und Anwendung im US-FTP-75 Zyklus eine HC-Emission von 0,01 g/ml und eine NOₓ-Emission von 0,02 g/ml überschritten wird. Insbesondere wird erfindungsgemäß eine Gesamt-Edelmetallmenge von 3 Gramm pro I Motorhubvolumen, vorzugsweise 2,5 Gramm, ideal 2 Gramm, optimal 1,5 Gramm bzw. 1 Gramm nicht überschritten.

Für Europafahrzeuge gilt sinngemäß, dass Fahrzeuge mit Ottomotoren, die im Neuen Europäischen Fahrzyklus NEFZ mit thermisch ungeschädigtem Katalysatorsystem eine HC-Emission von <0,07 g/km und eine NOx-Emission von <0,05 g/km erreichen, zumindest einen Katalysator mit Edelmetallgehalten von ≥50g/ft3 (1,79g/dm3), insbesondere ≥60g/ft3 (2,15g/dm3) aufweisen. Mit dem vorstehend beschriebenen Verfahren kann der Edelmetallgehalt zumindest eines ersten Katalysators auf ≤40g/ft3 (1,44g/dm3), insbesondere auf ≤5g/ft3 (0,18g/dm3), insbesondere auf Null und gleichzeitig eines zumindest einen nachgeschalteten Katalysators auf ≤20g/ft3 (0,72g/dm3), insbesondere auf ≤10g/ft3 (0,36g/dm3), abgesenkt werden, ohne dass nach Ofenalterung des Katalysatorsystems für 4 Stunden bei 1100°C in Atmosphäre mit 2% O₂ und 10% H₂O In demselben Fahrzeug und Anwendung des vorstehend beschriebenen Verfahrens im NEFZ eine HC-Emission von 0,1 g/km und eine NOₓ-Emission von 0,08 g/km überschritten wird.

## Patentansprüche

1. Brennkraftmaschine, insbesondere für ein Kraftfahrzeug, mit einem Ansaugtrakt (12) für Frischluft, einem Abgastrakt (14) für Abgas und einem Abgasturbolader (20, 30), wobei eine Turbine (30) des Abgasturboladers im Abgastrakt (14) und ein Verdichter (20) des Abgasturboladers im Ansaugtrakt (12) der Brennkraftmaschine angeordnet ist, **dadurch gekennzeichnet, dass** eine Fluidpumpe (36) vorgesehen ist, deren saugseitiger Anschluss (38) mit dem Abgastrakt (14) stromab der Turbine (30) des Abgasturboladers und dessen druckseitiger Anschluss (40) mit dem Abgastrakt (14) stromauf der Turbine (30) des Abgasturboladers verbunden ist.

2. Brennkraftmaschine nach Anspruch 1, **dadurch gekennzeichnet, dass** die Fluidpumpe (36) als Verdichter ausgebildet ist, der mit einer Turbine (26) als Antrieb des Verdichters (36) verbunden ist, wobei die Turbine (26) der Fluldpumpe (36) im Ansaugtrakt (12) der Brennkraftmaschine angeordnet ist.

3. Brennkraftmaschine nach Anspruch 2, **dadurch gekennzeichnet, dass** in dem Ansaugtrakt (12) der Brennkraftmaschine stromab des Verdichters (20) des Abgasturboladers eine Drosselklappe (22) angeordnet ist, wobei der Ansaugtrakt (12) eine Bypassleitung (24) aufweist, die den Verdichter (20) des Abgasturboladers und die Drosselklappe (22) überbrückt, wobei ferner die Turbine (26) der Fluidpumpe (36) in der Bypassleitung (24) angeordnet ist.

4. Brennkraftmaschine nach Anspruch 3, **dadurch gekennzeichnet, dass** in dem Ansaugtrakt (12) zwischen dem Verdichter (20) des Abgasturboladers und der Drosselklappe (22) eine Abblasevorrichtung (44) angeordnet ist.

5. Brennkraftmaschine nach Anspruch 4, **dadurch gekennzeichnet, dass** eine Abblaseleitung (45) vorgesehen ist, welche die Abblasevorrichtung (44) fluldleitend mit der Bypassleitung (24) stromauf der Turbine (26) verbindet.

6. Brennkraftmaschine wenigstens einem der Ansprüche nach Anspruch 3 bis 5, **dadurch gekennzeichnet, dass** in der Bypassleitung (24) stromab der Turbine (26) der Fluidpumpe (36) ein Sperrventil (28) angeordnet ist.

7. Brennkraftmaschine nach wenigstens einem der vorhergehenden Ansprüche, **dadurch gekennzeichnet, dass** zwischen dem saugseitigen Anschluss (38) der Fluidpumpe (36) und dessen Anschluss am Abgastrakt (14) stromab der Turbine (30) des Abgasturboladers ein 3/2-Wegeventil (42) angeordnet ist, wobei dieses 3/2-Wegeventil (42) zusätzlich mit dem Ansaugtrakt (12) verbunden ist.

8. Brennkraftmaschine nach wenigstens einem der vorhergehenden Ansprüche, **dadurch gekennzeichnet, dass** ein 3/2-Wegeventil (46) vorgesehen ist, welches den saugseltigen Anschluss (38) des Verdichters (36) mit der Bypassleitung (24) stromauf der Turbine (26) und mit dem Abgastrakt (14) stromab des Katalysators (32) verbindet.

9. Verfahren zum Betreiben einer Brennkraftmaschine, insbesondere für ein Kraftfahrzeug, bei dem eine für den Verbrennungsprozess über einen Ansaugtrakt der Brennkraftmaschine angesaugte Frischluft vor dem Eintritt in einen Brennraum der Brennkraftmaschine von einem Verdichter eines Abgasturboladers verdichtet wird, wobei der Verdichter des Abgasturboladers von einer im Abgastrakt der Brennkraftmaschine angeordneten Turbine angetrieben wird, **dadurch gekennzeichnet, dass** dem Abgastrakt der Brennkraftmaschine stromab der Turbine des Abgasturboladers Abgas entnommen und von einer Fluidpumpe dem Abgastrakt stromauf der Turbine des Abgasturboladers als Sekundärfluidstrom wieder zugeführt wird.

10. Verfahren nach Anspruch 9, **dadurch gekennzeichnet, dass** das entnommene Abgas vor der Zuführung In den Abgastrakt stromauf der Turbine des Abgasturboladers von einem Verdichter der Fluidpumpe verdichtet wird.

11. Verfahren nach Anspruch 10, **dadurch gekennzeichnet, dass** der Verdichter von einer im Ansaugtrakt der Brennkraftmaschine angeordneten Turbine angetrieben wird.

12. Verfahren nach wenigstens einem der Ansprüche 9 bis 11, **dadurch gekennzeichnet, dass** dem von der Fluidpumpe an den Abgastrakt stromauf der Turbine des Abgasturboladers zugeführten Sekundärfluidstrom stromauf der Fluidpumpe Frischluft zugemischt wird.

## Claims

1. Internal combustion engine, in particular for a motor vehicle, having an intake tract (12) for fresh air, having an exhaust tract (14) for exhaust gas, and having an exhaust-gas turbocharger (20, 30), wherein a turbine (30) of the exhaust-gas turbocharger is arranged in the exhaust tract (14) and a compressor (20) of the exhaust-gas turbocharger is arranged in the intake tract (12) of the internal combustion engine, **characterized in that** a fluid pump (36) is provided, the suction-side port (38) of which fluid pump is connected to the exhaust tract (14) downstream of the turbine (30) of the exhaust-gas turbocharger, and the pressure-side port .(40) of which fluid pump is connected to the exhaust tract (14) upstream of the turbine (30) of the exhaust-gas turbocharger.

2. Internal combustion engine according to Claim 1, **characterized in that** the fluid pump (36) is in the form of a compressor which is connected to a turbine (26) as a drive of the compressor (36), wherein the turbine (26) of the fluid pump (36) is arranged in the intake tract (12) of the internal combustion engine.

3. Internal combustion engine according to Claim 2, **characterized in that** a throttle flap (22) is arranged in the intake tract (12) of the internal combustion engine downstream of the compressor (20) of the exhaust-gas turbocharger, wherein the intake tract (12) has a bypass line (24) which bypasses the compressor (20) of the exhaust-gas turbocharger and the throttle flap (22), wherein, furthermore, the turbine (26) of the fluid pump (36) is arranged in the bypass line (24).

4. Internal combustion engine according to Claim 3, **characterized in that** a blowoff device (44) is arranged in the intake tract (12) between the compressor (20) of the exhaust-gas turbocharger and the throttle flap (22).

5. Internal combustion engine according to Claim 4, **characterized in that** a blowoff line (45) is provided which connects the blowoff device (44) in fluid-conducting fashion to the bypass line (24) upstream of the turbine (26).

6. Internal combustion engine according to at least one of Claims 3 to 5, **characterized in that** a shut-off valve (28) is arranged in the bypass line (24) downstream of the turbine (26) of the fluid pump (36).

7. Internal combustion engine according to at least one of the preceding claims, **characterized in that** a 3/2 directional valve (42) is arranged between the suction-side port (38) of the fluid pump (36) and the connection thereof to the exhaust tract (14) downstream of the turbine (30) of the exhaust-gas turbocharger, wherein said 3/2 directional valve (42) is additionally connected to the intake tract (12).

8. Internal combustion engine according to at least one of the preceding claims, **characterized in that** a 3/2 directional valve (46) is provided which connects the suction-side port (38) of the compressor (36) to the bypass line (24) upstream of the turbine (26) and to the exhaust tract (14) downstream of the catalytic converter (32).

9. Method for operating an internal combustion engine, in particular for a motor vehicle, in which fresh air inducted via an intake tract of the internal combustion engine for the combustion process is compressed, before entering a combustion chamber of the internal combustion engine, by a compressor of an exhaust-gas turbocharger, wherein the compressor of the exhaust-gas turbocharger is driven by a turbine arranged in the exhaust tract of the internal combustion engine, **characterized in that** exhaust gas is extracted from the exhaust tract of the internal combustion engine downstream of the turbine of the exhaust-gas turbocharger and is supplied, as a secondary fluid flow, back to the exhaust tract upstream of the turbine of the exhaust-gas turbocharger by a fluid pump.

10. Method according to Claim 9, **characterized in that** the extracted exhaust gas is compressed by a compressor of the fluid pump before being supplied into the exhaust tract upstream of the turbine of the exhaust-gas turbocharger.

11. Method according to Claim 10, **characterized in that** the compressor is driven by a turbine arranged in the intake tract of the internal combustion engine.

12. Method according to at least one of Claims 9 to 11, **characterized in that** the secondary fluid flow supplied by the fluid pump to the exhaust tract upstream of the turbine of the exhaust-gas turbocharger has fresh air admixed to it upstream of the fluid pump.

## Revendications

1. Moteur à combustion interne, en particulier pour un véhicule automobile, comprenant un système d'admission (12) pour de l'air frais, un système d'échappement (14) pour du gaz d'échappement et un turbocompresseur à gaz d'échappement (20, 30), une turbine (30) du turbocompresseur à gaz d'échappement étant disposée dans le système d'échappement (14) et un compresseur (20) du turbocompresseur à gaz d'échappement étant disposé dans le système d'admission (12) du moteur à combustion interne, **caractérisé en ce qu'**une pompe à fluide (36) est prévue, dont le raccord côté admission (38) est connecté au système d'échappement (14) en aval de la turbine (30) du turbocompresseur à gaz d'échappement et dont le raccord côté pression (40) est connecté au système d'échappement (14) en amont de la turbine (30) du turbocompresseur à gaz d'échappement.

2. Moteur à combustion interne selon la revendication 1, **caractérisé en ce que** la pompe à fluide (36) est réalisée sous forme de compresseur, qui est connecté à une turbine (26) en tant qu'entraînement du compresseur (36), la turbine (26) de la pompe à fluide (36) étant disposée dans le système d'admission (12) du moteur à combustion interne.

3. Moteur à combustion interne selon la revendication 2, **caractérisé en ce que** dans le système d'admission (12) du moteur à combustion interne en aval du compresseur (20) du turbocompresseur à gaz d'échappement est disposé un clapet d'étranglement (22), le système d'admission (12) présentant une conduite de dérivation (24), qui surmonte le compresseur (20) du turbocompresseur à gaz d'échappement et le clapet d'étranglement (22), la turbine (26) de la pompe à fluide (36) étant en outre disposée dans la conduite de dérivation (24).

4. Moteur à combustion interne selon la revendication 3, **caractérisé en ce que** dans le système d'admission (12) entre le compresseur (20) du turbocompresseur à gaz d'échappement et le clapet d'étranglement (22) est disposé un dispositif de décharge (44).

5. Moteur à combustion interne selon la revendication 4, **caractérisé en ce qu'**une conduite de décharge (45) est prévue, laquelle relie le dispositif de décharge (44) par communication fluidique à la conduite de dérivation (24) en amont de la turbine (26).

6. Moteur à combustion interne selon au moins l'une quelconque des revendications 3 à 5, **caractérisé en ce que** dans la conduite de dérivation (24) en aval de la turbine (26) de la pompe à fluide (36) est disposé un clapet anti-retour (28).

7. Moteur à combustion interne selon au moins l'une quelconque des revendications précédentes, **caractérisé en ce qu'**entre le raccord côté admission (38) de la pompe à fluide (36) et son raccord au niveau du système d'échappement (14) en aval de la turbine (30) du turbocompresseur à gaz d'échappement est disposée une soupape à 3/2 voies (42), cette soupape à 3/2 voies (42) étant connectée en outre au système d'admission (12).

8. Moteur à combustion interne selon au moins l'une quelconque des revendications précédentes, **caractérisé en ce qu'**il est prévu une soupape à 3/2 voies (46), laquelle relie le raccord côté admission (38) du compresseur (36) à la conduite de dérivation (24) en amont de la turbine (26) et au système d'échappement (14) en aval du catalyseur (32).

9. Procédé pour faire fonctionner un moteur à combustion interne, en particulier pour un véhicule automobile, dans lequel de l'air frais aspiré pour le processus de combustion par le biais d'un système d'admission du moteur à combustion interne est comprimé avant l'entrée dans une chambre de combustion du moteur à combustion interne par un compresseur d'un turbocompresseur à gaz d'échappement, le compresseur du turbocompresseur à gaz d'échappement étant entraîné par une turbine disposée dans le système de gaz d'échappement du moteur à combustion interne, **caractérisé en ce que** du gaz d'échappement est prélevé en aval de la turbine du turbocompresseur à gaz d'échappement depuis le système d'échappement du moteur à combustion interne et est à nouveau acheminé par une pompe à fluide au système d'échappement en amont de la turbine du turbocompresseur à gaz d'échappement sous forme de flux de fluide secondaire.

10. Procédé selon la revendication 9, **caractérisé en ce que** le gaz d'échappement prélevé est comprimé par un compresseur de la pompe à fluide avant d'être acheminé dans le système d'échappement en amont de la turbine du turbocompresseur à gaz d'échappement.

11. Procédé selon la revendication 10, **caractérisé en ce que** le compresseur est entraîné par une turbine disposée dans le système d'admission du moteur à combustion interne.

12. Procédé selon au moins l'une quelconque des revendications 9 à 11, **caractérisé en ce que** le flux de fluide secondaire acheminé par la pompe à fluide au système d'échappement en amont de la turbine du turbocompresseur à gaz d'échappement est mélangé en amont de la pompe à fluide avec de l'air frais.
